Europäisches Patentamt

European Patent Office

Office européen des brevets

(19)

(11) Publication number: **0 158 943**
**B1**

# EUROPEAN PATENT SPECIFICATION

(12)

(45) Date of publication of patent specification: **15.03.89**

(51) Int. Cl.⁴: **B 01 D 15/08**

(21) Application number: **85104180.6**

(22) Date of filing: **05.04.85**

(54) Bottom for large columns.

(30) Priority: **12.04.84 JP 73299/84**

(43) Date of publication of application:
**23.10.85 Bulletin 85/43**

(45) Publication of the grant of the patent:
**15.03.89 Bulletin 89/11**

(84) Designated Contracting States:
**AT BE CH DE FR GB IT LI LU NL SE**

(56) References cited:
**EP-A-0 005 650**
**DE-A-2 642 359**
**GB-A- 22 955**
**NL-A- 14 233**

(73) Proprietor: **SUOMEN SOKERI OY**
**Kyllikinportti 2**
**SF-00240 Helsinki (FI)**

(72) Inventor: **Yoritomi, Kenzaburo**
**Hanazono 2-4-5**
**Chibashi (JP)**

(74) Representative: **Andrejewski, Walter et al**
**Patentanwälte Andrejewski, Honke & Partner**
**Postfach 10 02 54 Theaterplatz 3**
**D-4300 Essen 1 (DE)**

The file contains technical information
submitted after the application was filed and
not included in this specification

Courier Press, Leamington Spa, England.

## Description

The present invention relates to a bottom structure for large-scale chromatographic separation columns containing particulate adsorbent material or other active material, including a bottom construction and uniformly distributed collecting means comprising uniformly distributed branch pipes provided with uniformly distributed small holes at their bottom side and a filter screen mantle, as well as one or more collecting pipes.

In the past, large columns packed with a particulate material have been used, for instance, for separations and enzyme reactions on an industrial scale. Because the diameter of these columns is very large, it is difficult to achieve a uniform flow at all points of the column.

In large-scale column chromatography, the increased column diameter results in impaired column performance caused by disturbances in the flow. In downflow columns operating at atmospheric pressure the bottom construction is one of the problem areas. Columns are frequently constructed with a bottom consisting of a filtering net or a perforated plate on which a layer of sand or glass beads is provided. However, this construction does not result in a completely uniform liquid flow into the outlet pipe. An alternative is to arrange a branched pipe construction at the column bottom to collect the outflow stream. Typical constructions are shown in U.S. Patent 2,365,221, U.S. Patent 3,928,193 and DE Patent 2,642,359.

Back mixing cannot be avoided with these constructions. As a remedy Wright (U.S. Patent 3,298,527) and Böing (DE Patent 2,808,154) have suggested the introduction of fins or walls into the column. These means divide the large column into segments, and in fact the column works as a system of thin columns. By this method the separation performance is improved but filling, as well as backwash, of the column becomes complicated.

U.S. Patent 4,267,054 discloses an improved method for the chromatogrpahic separation of soluble components from a multicomponent mixture. According to said method, a contaminated fraction containing several of the components but with an incremental increase in one of the components is returned to the top of the column for more complete separation. Said method is rather complicated and it is not very efficient.

The present invention provides an improved bottom structure for large-scale chromatographic separation columns adapted to permit sharp separation between the components of a multicomponent mixture. The new bottom structure is characterized, with respect to the structure disclosed at the beginning, in that the bottom construction comprises alternating ridges and furrows, and that said branch pipes are situated in said furrows.

The branch pipes fit into the furrows and they are provided with uniformly distributed small holes at the bottom side of the pipe. The filter screen mantle around the pipe prevents the column filling material (resin or the like) from clogging pipe holes. -

The ridges have preferably a triangular cross section. The furrows are dimensioned to fit the pipes in order to ensure uniform flow into the pipe holes.

In very large chromatographic columns the bottom section is preferably divided into blocks each of which is provided with a collecting pipe. The collecting pipes drain into the main outlet system.

By this bottom construction a uniform flow through the column is achieved and back mixing in the column is avoided. A completely uniform flow is important in chromatographic separations for which this bottom construction is intended. -

One way of carrying out the invention is described in detail in the following with reference to the accompanying drawings which illustrate only one specific embodiment, in which:

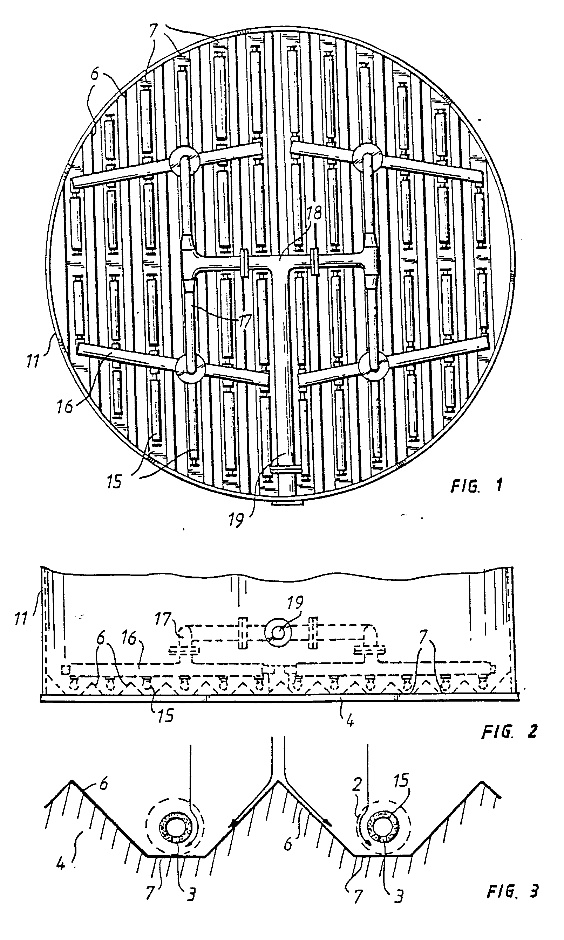

Figure 1 is a horizontal view of the bottom part of the column,

Figure 2 is a vertical cross-sectional view of the bottom part of the column, and

Figure 3 shows a part of the bottom structure of alternating ridges and furrows, as well as branch pipes.

The Figures show the bottom of the column having a structure of alternating ridges 6 and furrows 7. On the bottom 4 there are uniformly distributed branch pipes 15, which fit into the furrows 7 and which are provided with small holes 3 at the bottom side.

A filter screen mantle 2 around the branch pipe 15 prevents the column filling material (not shown) from clogging pipe holes 3.

The bottom section is divided into blocks each of which is provided with a collecting pipe 16. The collecting pipes 17 and 18 drain into the main outlet pipe 19.

## Claims

1. Bottom arrangement of a large-scale chromatographic separation column containing particulate adsorbent material or other active material, including a bottom construction (4) and uniformly distributed collecting means comprising uniformly distributed branch pipes (15) provided with uniformly distributed small holes (3) at their bottom side and a filter screen mantle (2), as well as one or more collecting pipes (16, 17, 18, 19), characterized in that said bottom construction (4) comprises alternating ridges (6) and furrows (7) and that said branch pipes (15) are situated in said furrows (7).

2. Bottom arrangement as claimed in claim 1, characterized in that the bottom construction (4) is divided into several blocks having about the same area, each block comprising alternating ridges (6) and furrows (7) as well as branch pipes (15) situated in said furrows (7), and that the collecting pipes (16) are arranged from the centre of each block to other collecting pipes (17, 18) connected symmetrically to the main outlet pipe (19) in the centre of the bottom of the column.

**Patentansprüche**

1. Boden für großdimensionierte chromatografische Trennsäulen, welche korpuskulares, adsorbierendes Material oder anderes aktives Material enthalten, mit einer Bodenkonstruktion und gleichmäßig verteilten Sammeleinrichtungen, welche aus gleichmäßig verteilten Zweigleitungen mit gleichmäßig verteilten engen Löchern an ihrer Unterseite und einem Filtersiebmantel sowie einem oder mehreren Sammelrohren (16, 17, 18, 19) bestehen, dadurch gekennzeichnet, daß die Bodenkonstruktion (4) aus einander abwechselnden Rippen (6) und Furchen (7) besteht und daß die Zweigleitungen (15) in den Furchen angeordnet sind.

2. Boden nach Anspruch 1, dadurch gekennzeichnet, daß die Bodenkonstruktion (4) in mehrere Blöcke mit jeweils etwa der gleichen Fläche aufgeteilt ist, wobei jeder Block einander abwechselnde Rippen (6) und Furchen (7) sowie in diesen Furchen liegende Zweigleitungen (15) aufweist, und daß die Sammelleitungen (16) von der Mitte eines jeden Blockes aus mit anderen Sammelleitungen (17, 18) verbunden sind, die in symmetrischer Anordnung mit dem Hauptauslaßrohr (19) in der Mitte des Bodens der Trennsäule verbunden sind.

**Revendications**

1. Dispositif constituant le fond d'une colonne séparatrice chromatographique de grandes dimensions contenant une substance particulaire adsorbante ou une autre substance active, et comprenant une structure de fond (4) et des moyens de collecte uniformément répartis comprenant des canalisations de dérivation (15) réparties uniformément et comportant des petits trous (3), uniformément répartis, au niveau de leur face inférieure, et une enveloppe formant tamis (2) ainsi qu'une ou plusieurs canalisations de collecte (16, 17, 18, 19), caractérisé en ce que ladite structure de fond (4) comporte des nervures (6) et des rainures (7), alternées, et que lesdites canalisations de dérivation (15) sont situées dans lesdites rainures (7).

2. Dispositif formant fond selon la revendication 1, caractérisé en ce que la structure de fond (4) est subdivisée en plusieurs blocs possédant approximativement la même superficie, chaque bloc comprenant des nervures (6) et des rainures (7), alternées, ainsi que des canalisations de dérivation (15) situées dans lesdites rainures (7), et que les canalisations de collecte (16) s'étendent depuis le centre de chaque bloc jusqu'à d'autres canalisations de collecte (17, 18) raccordées, de façon symétrique, à la canalisation principale de sortie (19) située au centre du fond de la colonne.

FIG. 1

FIG. 2

FIG. 3